# EUROPEAN PATENT APPLICATION

(11) **EP 2 073 522 A1**
(43) Date of publication of application: **24.06.2009**
(21) Application number: 08171685.4
(22) Date of filing: 15.12.2008
(51) Int. Cl.: H04M 3/42, H04M 3/51, H04M 7/00

(54) **Private extensions of CSTA protocol**

(30) Priority: 17.12.2007 CN 200710198479
(71) Applicant: Huawei Technologies Co., Ltd., Longgang District, Shenzhen Guangdong 518129 (CN)
(72) Inventor: Xiong, Bin c/o Huawei Technologies Co., Ltd., 518129, Shenzhen Guangdong (CN); Sang, Tao c/o Huawei Technologies Co., Ltd., 518129, Shenzhen Guangdong (CN)
(74) Representative: Körber, Martin Hans

(57) **Abstract**

The present invention relates to private extensions of the Computer Supported Telecommunications Applications, CSTA, protocol. The CSTA protocol provides separate Switching Function Services, Computing Function Services and Voice Unit services. In order to play a voice message to the caller before the call is being diverted to [another] agent, the Voice Unit service "Play Message" is to be used followed by the Divert Call Service or the Route Select Service. The application aims at playing a voice message without making use of any service in addition to the Divert Call Service or the Route Select Service. This is being achieved by adding a so-called "voice parameter" to the Services just mentioned. When the switch obtains the Service with such a "voice parameter", the switch can play voice according to the voice parameters. Therefore, the present invention enables play of voice without modifying the existing service process, thus simplifying the implementation.

## Description

### FIELD OF THE INVENTION

This present invention relates to communication technologies, and in particular, to a service execution technology based on the Computer Supported Telecommunications Applications (CSTA) protocol.

### BACKGROUND

In the existing network applications, the scenarios hereinafter usually occur.

Scenario 1: When user A talks with attendant B, if attendant B feels unable to answer the question of user A, attendant B can decide to divert the call of user A to attendant C numbered 4527. Specifically, the Personal Computer, PC, side (for example, a CTI platform) sends a DivertCall service to the switch, and the switch (for example, switching equipment) diverts the call of user A to attendant C. However, the DivertCall service has no interface of voice parameters in the CSTA protocol. Therefore, after the call of user A is diverted to attendant C, attendant C has to tell user A manually "Hello, this is attendant 4527 serving you". Otherwise, user A is unable to know the employee ID of the attendant who is serving the user A. In this scenario, if the DivertCall service is replaced with a SingleStepTransfer service, the same problem occurs.

Scenario 2: User A dials an access number 114 to access an Automatic Call Distributor (ACD), waiting for the system to allocate an attendant. The ACD detects a new call, and reports a RouteRequest to the PC side. The PC side searches for an idle attendant. Supposing that the idle attendant is attendant C numbered 4527, the PC side sends a RouteSelect service to the switch, notifying the switch to divert the call to attendant C. Similarly, the RouteSelect service has no interface of voice parameters in the CSTA protocol. Therefore, attendant C has to tell user A manually "Hello, this is attendant 4527 serving you".

In both scenario 1 and scenario 2, whenever a user accesses the ACD, the attendant has to tell the employee ID manually. The attendant has to handle plenty of user calls everyday, and will have heavier workload if they have to repeat the employee ID in every call.

In order to reduce the workload of the attendant, the technicians in this field have improved scenario 1 and scenario 2, as described hereinafter.

Improved scenario 1: When user A talks with attendant B, if attendant B feels unable to answer the question of user A, attendant B can decide to divert the call of user A to attendant C numbered 4527. Specifically, attendant B can trigger the PC to send a DivertCall service to the switch, and the switch diverts the call of user A to a voice unit of the switch. Afterward, the PC sends a voice operation command to the voice unit. The voice unit plays "Hello, this is attendant 4527 serving you". Finally, the PC sends a DivertCall service to the voice unit, and the voice unit diverts the call of user A to attendant C. In the previous scenario, the DivertCall service can be replaced with the SingleStepTransfer service.

Improved Scenario 2: User A dials an access number 114 to access the ACD, waiting for the system to allocate an attendant. The switch detects a new call, and reports a RouteRequest to the PC. The PC searches for an idle attendant. Supposing that the found idle attendant is attendant C numbered 4527, the PC sends a RouteSelect service to the switch, and the switch diverts the call of user A to a voice unit at the switch side, and sends a voice operation command to the voice resource unit. The voice unit plays "Hello, this is attendant 4527 serving you". The PC sends a DivertCall service to the voice unit again, and the voice unit diverts the call of user A to attendant C.

Through meticulous study, the inventor finds out that both improved scenario 1 and improved scenario 2 have to modify the service process of the existing scenario I and scenario 2, which increases the complexity of the implementation.

### SUMMARY

The embodiments of the invention provide a CSTA protocol-based service delivery method, a service execution method, a PC and a switch to play voices without modifying the existing service process to simplify the implementation.

In order to solve the previous technical issue, the present invention provides a embodiment of a CSTA protocol-based service delivery method, which includes: obtaining a switching function service that carries voice parameters; and sending the switching function service that carries voice parameters down to the switch side.

Further, the present invention provides a embodiment of a CSTA protocol-based service execution method, which includes: obtaining a switching function service that carries voice parameters from the PC; and playing a voice according to the switching function service that carries voice parameters; and executing the switching function service.

Further still, the present invention provides a embodiment of a CSTA protocol-based PC, which includes: a service obtaining unit, adapted to obtain the switching function service that carries voice parameters; and a service delivery unit, adapted to send the switching function service that carries voice parameters down to the switch side.

Further still, the present invention provides a enbodiment of a CSTA protocol-based switch, which includes: a service obtaining unit, adapted to obtain the switching function service that carries voice parameters from the PC; a voice playing unit, adapted to play a voice according to the switching function service that carries voice parameters; and a service executing unit, adapted to execute the switching function service.

Further still, the present invention provides a embodiment of a CSTA protocol-based voice service system, which includes: a PC, adapted to send a switching function service that carries voice parameters to the switch side; a switch, adapted to play a voice according to the switching function service that carries voice parameters sent from the PC, and execute the switching function service.

In the embodiments of the present invention, when the PC sends a switching function service to the switch, voice parameters can be carried in the switching function service. In this way, when the switch obtains the switching function service with voice parameters, the switch can play voices according to the voice parameters. Therefore, the embodiments of the present invention enable play of voices without modifying the existing service process, thus simplifying the implementation.

### BRIEF DESCRIPTION OF THE DRAWINGS

Figure 1 is a flowchart of a service delivery method according to an embodiment of the present invention.

Figure 2 is a flowchart of a service execution method according to an embodiment of the present invention.

Figure 3 is a flowchart of a first application embodiment of the present invention.

Figure 4 is a flowchart of a second application embodiment of the present invention.

Figure 5 illustrates the structure of a Computer Supported Telecommunications Applications (CSTA) protocol-based service delivery apparatus of an embodiment of the invention.

Figure 6 illustrates the structure of a Computer Supported Telecommunications Applications (CSTA) protocol-based service execution apparatus of an embodiment of the invention.

### DETAILED DESCRIPTION

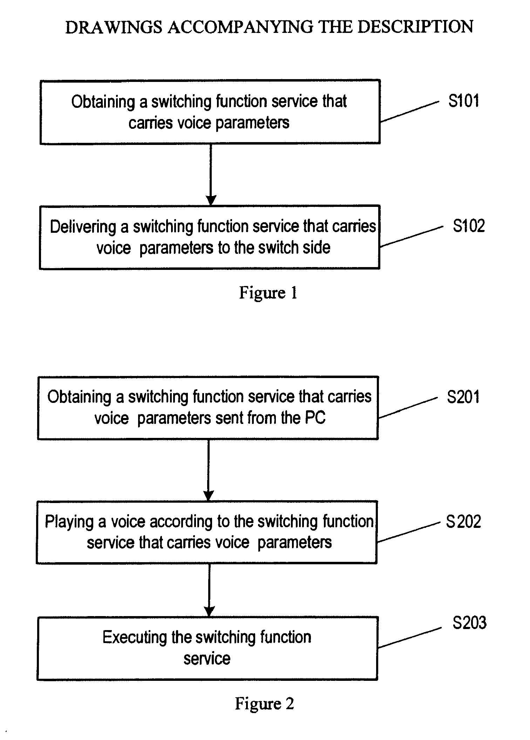

The CSTA protocol-based service delivery method according to an embodiment of the invention is introduced below. As shown in Figure 1, the service delivery method includes the steps hereinafter.

Step S101: obtaining a switching function service that carries voice parameters.

It may be the PC that sends the switching function service carrying voice parameters to the switch side. The PC side may obtain a switching function service that carries voice parameters from other network entities, or put the voice parameters into the switching function service before sending the switching function service to the switch side, namely, generate a switching function service that carries voice parameters. Nevertheless, the PC may pre-store a switching function service that carries voice parameters, and retrieve it when necessary.

The switching function service here is a service defined in the CSTA protocol, and may be specifically a service for call control sent by the PC to the switch, for example, a DivertCall service, a SingleStepTransfer service or a RouteSelect service. A voice parameter may be set in a private data field of the common arguments of such services, or may be set in any other extensible fields in such services, as long as such services can carry voice parameters.

Voice parameters may be only an instruction that commands the switch to play a voice, or additional designate the voice content. The voice content may be an information-specific content such as employee ID of the attendant and other introductory information; or a program-specific content such as music and joke. By the way, the voice content is not limited to those mentioned above, for the specific content is set during implementation.

Step S102: Sending a switching function service that carries voice parameters to the switch side.

It should be noted that, if in step S 101, the PC obtains the switching function service by obtaining the switching function service from another network entity, then in the actual application, the PC can obtain the switching function service from other network entity beforehand, and send the obtained switching function service to the switch side when the switching function service needs to be sent; the PC can obtain the switching function service from other network entity when the switching function service needs to be sent, and then send the obtained switching function service to the switch side.

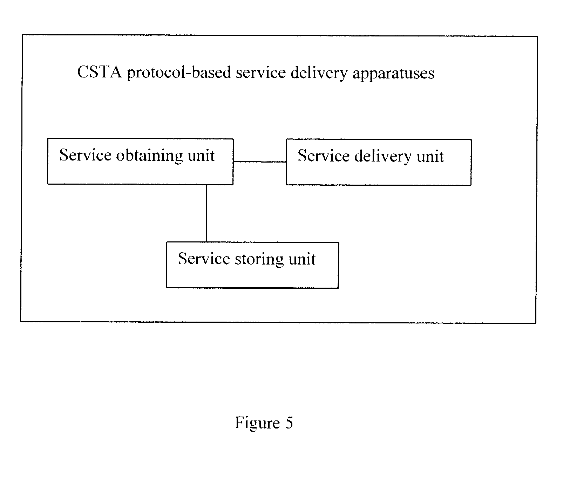

The previous CSTA protocol-based service delivery method can be implemented through different types of apparatuses. As shown in figure 5, one of the CSTA protocol-based service delivery apparatuses may include: a service obtaining unit, adapted to obtain a switching function service that carries voice parameters; and a service delivery unit, adapted to send the switching function service that carries voice parameters down to the switch side.

The service obtaining unit may obtain a switching function service that carries voice parameters from other network entities, or put the voice parameters into the switching function service before sending the switching function service to the switch side, namely, generate a switching function service that carries voice parameters. Additionally, the service delivery apparatus may include a service storing unit, adapted to pre-store a switching function service that carries voice parameters, so that the service obtaining unit can retrieve the switching function service that carries voice parameters from the service storing unit when the service obtaining unit needs to be used.

A voice parameter may be set in a private data field of the common arguments of such services, or may be set in any other extensible field in such services, as long as such services can carry voice parameters..

Moreover, all units of the service delivery apparatus can be applied at the PC side. The working mode of such units at the PC side is the same as that of the embodiment of the service delivery apparatus mentioned above, which is not repeated here any further.

Additionally, the present invention provides a CSTA protocol-based service execution method. As shown in Figure 2, the service execution method includes the steps hereinafter.

Step S201: Obtaining a switching function service that carries voice parameters sent from the PC.

Step S202: Playing voices according to the switching function service that carries voice parameters.

Step S203: Executing the switching function service.

Specifically, the service executing apparatus may negotiate with the PC about the voice parameter structure beforehand. In this way, when obtaining a switching function service that carries voice parameters from the PC, the service executing apparatus can resolve the switching function service that carries voice parameters according to the voice parameter structure negotiated beforehand with the PC, and will play the voice if the resolution succeeds.

If the voice parameters designate the voice content, the service executing apparatus will play the voice according to the voice content carried in the voice parameters. Alternatively, the voice content can be pre-stored locally. If the voice parameters designate the voice content but do not carry the voice content, or if the voice parameters do not designate the voice content, the service executing apparatus will play the voice according to the pre-stored voice content. Besides, if the voice content is neither carried in the voice parameters nor pre-stored locally, the voice content can be obtained from other network entities. Nevertheless, the voice content needs to suit the switching function service that carries the voice parameters. For example, the service executing apparatus or other network entities may pre-store many types of voice contents, when the switching service function carrying voice parameters requires to divert the call of user A from attendant B to attendant C, the employee ID of attendant C or other suitable voice contents can be played.

After the voice is played, the switching function service such as call diverting can be executed.

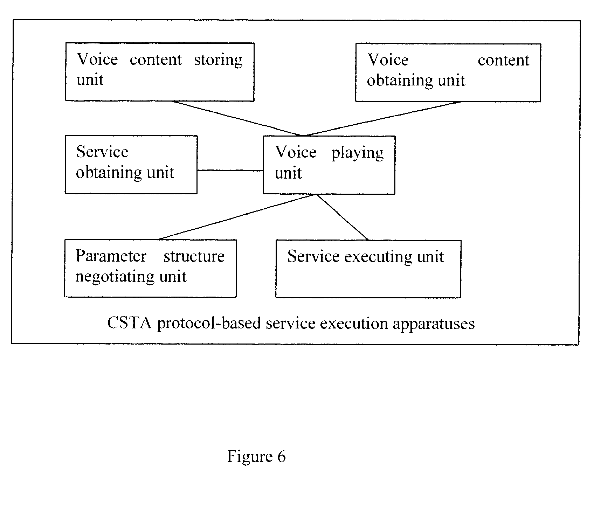

The previous CSTA protocol-based service execution method can be implemented through different types of apparatuses. As shown in figure 6, one of the CSTA protocol-based service execution apparatuses may include: a service obtaining unit, adapted to obtain a switching function service that carries voice parameters from the PC; a voice playing unit, adapted to play an voice according to the switching function service that carries voice parameters; a service executing unit, adapted to execute the switching function service.

Additionally, the CSTA protocol-based service executing apparatus may include a parameter structure negotiating unit, adapted to negotiate with the PC about the voice parameter structure. In this way, when the service obtaining unit obtains a switching function service that carries voice parameters from the PC, the voice playing unit can resolve the switching function service that carries voice parameters according to the voice parameter structure negotiated beforehand between the parameter structure negotiating unit and the PC, and will play the voice if the resolution succeeds.

If the voice parameters designate the voice content, the voice playing unit will play the voice according to the voice content carried in the voice parameters. Additionally, the service executing apparatus may include a voice content storing unit, adapted to store voice contents. In this way, if the voice parameters designate the voice content but do not carry the voice content, or if the voice parameters do not designate the voice content, the voice playing unit will play the voice according to the voice content pre-stored in the voice content storing unit. Additionally, the service executing apparatus may include a voice content obtaining unit. If the voice content is neither carried in the voice parameters nor pre-stored locally, the voice content obtaining unit can obtain the voice content from other network entities. Nevertheless, the voice content needs to suit the switching function service that carries the voice parameters. For example, if the voice content storing unit or other network entities pre-store many types of voice contents, when the switching service function carrying voice parameters received at the service obtaining unit requires to divert the call of user A from attendant B to attendant C, the voice playing unit can play the employee ID of attendant C or other suitable voice contents.

After the voice playing unit plays the voice, the service executing unit can execute the switching function service such as call diverting.

Moreover, all units of the service executing apparatus can be applied at the switch side. The working mode of such units at the switch side is the same as that of the embodiment of the service executing apparatus mentioned above, which is not repeated here any further.

Corresponding to the PC and the switch provided in an embodiment of the present invention, the present invention provides a CSTA protocol-based voice service system, which includes: a PC side, adapted to send a switching function service that carries voice parameters to the switch side; a switch side, adapted to play an voice according to the switching function service that carries voice parameters sent from the PC, and execute the switching function service.

The working mode at the PC side and the switch side is similar to that of the embodiments of the service delivery apparatus and the service executing apparatus described above, and is not repeated here any further.

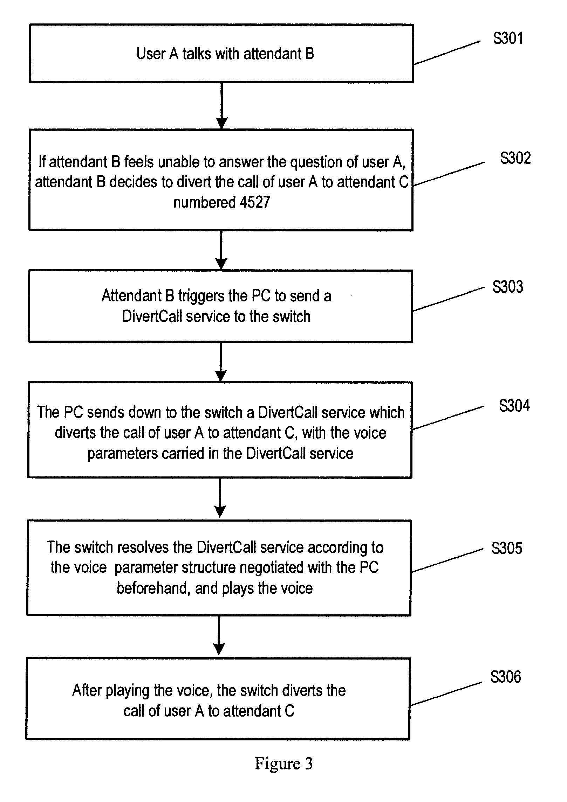

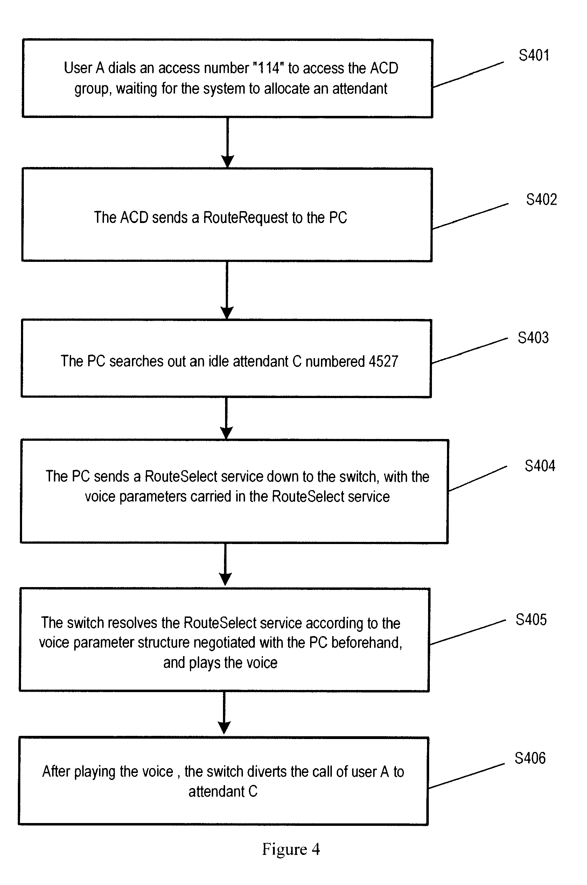

Two application embodiments of the present invention are described below, with reference to Figure 3 and Figure 4.

Figure 3 is the flowchart of the first application embodiment of the present invention. Scenario 1 is taken as an example for the process shown in Figure 3: When user A talks with attendant B, if attendant B feels unable to answer the question of user A, attendant B can decide to divert the call of user A to attendant C numbered 4527. Specifically, the process shown in Figure 3 includes the steps hereinafter.

Step S301: User A talks with attendant B.

S302: If attendant B feels unable to answer the question of user A, attendant B decides to divert the call of user A to attendant C numbered 4527.

Step S303: Attendant B triggers the PC to send a DivertCall service to the switch.

Step S304: The PC delivers to the switch a DivertCall service which diverts the call of user A to attendant C, with the voice parameters carried in the DivertCall service.

The voice parameters can be put into any extensible field of the DivertCall service; or put into the private data field of the CSTACommonArguments structure field reserved in the parameter interface defined by the CSTA for DivertCall service.

The CSTA protocol defines the parameter structure of the DivertCall service as follows:

```
          DivertCallArgument::= 
```

```
          SEQUENCE 
```

```
          {divertInfo     DivertInfo, 
```

```
          deviceProfile   DeviceProfile         OPTIONAL, 
```

```
          correlatorData  CorrelatorData        OPTIONAL, 
```

```
          extensions      CSTACommonArguments   OPTIONAL} 
```

The CSTA protocol defines the data type "CSTACommonArguments" as follows:

```
          CSTACommonArguments::=[APPLICATION 30]IMPLICT SEQUENCE
```

```
          {security   [0]IMPLICIT CSTASecurityData        OPTIONAL,
```

```
          privateData [1]IMPLICIT SEQUENCE OF CSTAPrivateData OPTIONAL}
```

The CSTA protocol defines the data type "CSTAPrivateData" as follows:

```
          CSTAPrivateData::=NULL - - The actual encoding of the private event is added here 
```

```
                                 - - replacing NULL with another valid ASN. 1 type
```

Therefore, the CSTA protocol does not define the content of the CSTAPrivateData. Under the embodiment of the present invention, the "CSTAPrivateData" data type is defined as data type of a voice parameter structure. This voice parameter structure may be a voice parameter such as "MessageID" defined by the CSTA protocol in order for the voice resource unit to perform voice operations. Under the embodiment of the present invention, the "CSTAPrivateData" data type is redefined as follows:

```
          CSTAPrivateData ::= CHOICE
```

```
          {
```

```
               null [0]              IMPLICIT        NULL        OPTIONAL,
```

```
               messageToBePlayed [1] IMPLICIT   MessageID        OPTIONAL
```

```
          }
```

It should be noted that the definition of the "CSTAPrivateData" data type may be in any other form as long as the CSTAPrivateData carries the voice parameters. Moreover, the voice parameters may designate the voice content. Specifically, a voice parameter may include the voice content. In this case, the voice content contained in the voice parameter can be played no matter whether any voice content is stored at the switch side or not. A voice parameter may exclude the voice content but designate a type of voice content. In this case, the switch may locally search for the voice content corresponding to the specified type as indicated by the voice parameter. Alternatively, the voice parameter may notify the switch to play the voice, without designating any voice content. In this case, after receiving the voice parameter, the switch determines the voice to be played, and then checks the operations required by the PC to be performed by the switch. Afterward, the switch locally searches for the voice content that suits the operation, and then plays the voice content.

It should be noted that a voice parameter may be a character or a string for indicating the voice play operation. For example, if the voice parameter is a character "A" which indicates the voice play operation, the switch can determine that the PC requires play of the voice after resolving the character "A". In this case, the switch can check the call control operation required by the PC. In an example, if the PC requires the switch to divert a call, the switch should play a voice about call diverting or the employee ID of a new attendant. A voice parameter may be more than a character or string that indicates the voice play operation. It may include the audio data of the voice content. Nevertheless, the voice parameters occupy more network resources in this case. If containing no audio data, the voice parameter may contain a character or string that identifies the voice content. For example, if the voice parameter includes a character "D" for designating the voice content in addition to a character "A" that indicates the voice play operation, or, if the voice parameter contains a character "D" for designating the voice content, after the switch side receives the voice parameter, the switch side can search for the voice content (namely, audio data) corresponding to the character "D" pre-stored locally, and then play the found voice content. The previous examples are for illustration only. The form of the voice parameter and the carried content may be diversified, and designed as required in the actual application.

Moreover, the DivertCall service that carries voice parameters can be preset at the PC side or in other network entities. When a DivertCall service needs to be sent, the PC will obtain the DivertCall service from other network entities that store the DivertCall service. The PC can also generate a DivertCall service by itself before delivering the DivertCall service.

Step S305: The switch side resolves the DivertCall service according to the voice parameter structure as negotiated with the PC beforehand, and plays the voice.

Before step 305, the switch can negotiate the voice parameter structure with the PC. In this way, the switch can resolve the switching function service after receiving the switching function service from the PC.

As mentioned above, a voice parameter may contain the voice content. After receiving such a voice parameter, the switch can play "Hello, this is attendant 4527 serving you". If the voice parameter notifies the switch to play a voice, without containing the voice content, the switch can resolve the content of the DivertCall service first. In this example, the content of the service is to divert the call of user A to attendant C. After resolving such contents, the switch can play the pre-stored voice obtained from other network entities, for example, "Hello, this is attendant 4527 serving you". Nevertheless, the precondition of this means is that the voice is pre-stored in the switch or other network entities.

Step S306: After playing the voice, the switch diverts the call of user A to attendant C.

Generally, if the voice is not interrupted, the switch can divert the call of user A to attendant C after completion of playing the voice. If the voice is interrupted, for example, by the user due to urgency the switch can divert the call of user A to attendant C after interruption of the voice.

In the embodiment shown in Figure 3, the PC side sends a DivertCall service. In the actual application, the PC may send a SingleStepTransfer service; the difference, however, lies in that if the PC side delivers a DivertCall service, the system does not need to perform charging again for the call of user A after the switch diverts the call of user A to attendant C; if the PC sends a SingleStepTransfer service, the system needs to perform charging again for the call of user A after the switch diverts the call of user A to attendant C.

The CSTA protocol defines the parameter structure of the SingleStepTransfer service as follows:

```
          SingleStepTransArgument::= 
```

```
          SEQUENCE 
```

```
          {activeCall               ConnectionID, 
```

```
          device To TransferTo      DeviceID,
```

```
           transferToDeviceProfile  DeviceProfile               OPTIONAL,
```

```
           accountCode              [0]IMPLICIT Accountinfo     OPTIONAL,
```

```
          authCode                  [1]IMPLICIT AuthCode        OPTIONAL,
```

```
          correlatorData            [1]IMPLICIT CorrelatorData  OPTIONAL,
```

```
           extensions               CSTACommonArguments         OPTIONAL} 
```

Evidently, the SingleStepTransfer service also has the "CSTACommonArguments" structure field. Therefore, in the embodiments of the present invention, the data type "CSTAPrivateData" of the "privateData" field in the "CSTACommonArguments" data type can still be redefined in the same form as in step S304, or in other forms. Likewise, the definition of the "CSTAPrivateData" data type may be in any form other than described in step 304 as long as the CSTAPrivateData carries the voice parameters. Moreover, the voice parameters may carry the voice content, for example, "Hello, this is attendant 4527 serving you". Nevertheless, the voice parameters may be used for notifying the switch to play a voice, without carrying any voice content.

The first embodiment described above corresponds to scenario 1. The second embodiment corresponding to scenario 2 under the present invention is described below. Specifically, the process shown in Figure 4 includes the steps hereinafter.

Step S401: User A dials an access number "114" to access the ACD group, waiting for the system to allocate an attendant.

Step S402: The ACD sends a RouteRequest to the PC side.

Step S403: The PC side searches out an idle attendant, for example, attendant C numbered 4527.

Step S404: The PC side delivers a RouteSelect service to the switch, with the voice parameters carried in the RouteSelect service.

The voice parameters can be put into any extensible field of the RouteSelect service; or put into the private data field of the CSTACommonArguments structure field reserved in the parameter interface defined by the CSTA for RouteSelect service.

The CSTA protocol defines the parameter structure of the RouteSelect service as follows:

```
           RouteSelectArgument::= 
```

```
           SEQUENCE
```

```
           {crossReftdentifier   RoutingCrossRefID, 
```

```
           routeselected         CalledDeviceID,
```

```
            remainRetry          RetryValue           OPTIONAL, 
```

```
           deviceProfile         DeviceProfile        OPTIONAL,
```

```
           routeUsedReq          RouteUsedFlag        OPTIONAL, 
```

```
            correlatorData       CorrelatorData       OPTIONAL, 
```

```
           extensions             CSTACommonArguments     OPTIONAL} 
```

The CSTA protocol defines the data type "CSTACommonArguments" as follows:

```
           CSTACommonArguments::=[APPLICATION 30]IMPLICT SEQUENCE
```

```
           { security [0]IMPLICIT CSTASecurityData               OPTIONAL,
```

```
           privateData [1]IMPLICIT SEQUENCE OF CSTAPrivateData   OPTIONAL}
```

The CSTA protocol defines the data type "CSTAPrivateData" as follows:

```
           CSTAPrivateData::=NULL - - The actual encoding of the private event is added here
```

```
                                  - - replacing NULL with another valid ASN.1 type
```

In this embodiment, the data type "CSTAPrivateData" is redefined as follows:

```
           CSTAPrivateData ::= CHOICE
```

```
           {
```

```
               null [0]                  IMPLICIT       NULL      OPTIONAL,
```

```
               messageToBePlayed [1]   IMPLICIT    MessageID     OPTIONAL
```

```
           }
```

It should be noted that the definition of the "CSTAPrivateData" data type may be in any other form so long as the CSTAPrivateData carries the voice parameters. Moreover, the voice parameters may designate the voice content. Specifically, a voice parameter may include the voice content. In this case, the voice content contained in the voice parameter can be played no matter whether any voice content is stored at the switch side or not. A voice parameter may exclude the voice content but designate a type of voice content. In this case, the switch may locally search for the voice content corresponding to the specified type as indicated by the voice parameter. Alternatively, the voice parameter may notify the switch to play the voice, without designating any voice content. In this case, after receiving the voice parameter, the switch determines the voice to be played, and then checks the operations required by the PC side to be performed by the switch. Afterward, the switch locally searches for the voice content that suits the operation, and then plays the voice content.

Moreover, the RouteSelect service that carries voice parameters can be preset at the PC side or in other network entities. When a RouteSelect service needs to be sent, the PC side will obtain the RouteSelect service from other network entities that store the RouteSelect service. The PC side can also generate a RouteSelect service by itself before delivering the RouteSelect service.

Step S405: The switch resolves the RouteSelect service according to the voice parameter structure as negotiated with the PC side beforehand, and plays the voice.

Step S406: After playing the voice, the switch diverts the call of user A to attendant C.

It should be noted that the first embodiment and the second embodiment mentioned above take the DivertCall service, SingleStepTransfer service and RouteSelect service as examples. In the actual application, the PC side can carry the voice parameter in the switching function service sent to the switch if the operation of playing an voice by the switch is required. Likewise, the voice parameters can be carried in an idle field of such services (if such services have reserved idle fields), or carried in an extensible field of such services.

In the embodiment of the present invention, the switching function service sent by the PC side to the switch carries voice parameters, and the switch plays the voice according to the voice parameters. Comparing to the prior art, the embodiments of present invention do not modify the existing service process, which simplifies the implementation.

Attendant B must divert the call of user A to the voice resource unit rather than attendant C in the prior art, when attendant B needs to divert the call of user A to attendant C. In the embodiments of the present invention, the DivertCall service carries voice parameters. Therefore, when attendant B designates to divert the call of user A to attendant C, the PC side will send the DivertCall service that carries voice parameters to the switch. The switch can divert the call of user A to attendant C after playing the voice, thus fulfilling the service application requirements of scenario 1 completely.

In the prior art, after completion of playing the voice, the switch needs to send a voice completion event to the PC side, and the PC side sends a switching function service after receiving the voice completion event, which makes the implementation more complex at the PC side. In the embodiments of the present invention, after the PC side sends the switching function service that carries voice parameters to the switch, the subsequent processes are handled by the switch, for example, playing the voice and diverting the call to the specified attendant. Comparing to the prior art, the present invention simplifies the implementation at the PC side.

Finally, it should be noted that in any existing network service, if a network entity similar to a switch needs to play an voice, the network entity similar to a PC side can send a switching function service that carries voice parameters to the network entity similar to a switch, without the need of carrying voice parameters if no voice needs to be played. In this way, the services can be applied more flexibly in the existing network
In one embodiment, computer readable media comprises computer program codes for implementing a CSTA protocol-based service delivery. The computer program codes may be logic encoded in one or more tangible media for execution. As used herein, logic encoded in one or more tangible media is defined as instructions that are executable by a programmed processor and that are provided on computer-readable storage media, memories, or a combination thereof. When executed, the logic is operable to obtain a switching function service that carries voice parameters; and send the switching function service that carries voice parameters down to the switch side. When executed, the logic encoded in one or more tangible media is also operable to retrieve the switching function service carrying the voice parameters stored locally; obtain the switching function service carrying the voice parameters from other network entities; and generate the switching function service carrying the voice parameters. In another embodiment, computer readable media comprises computer program codes for implementing a CSTA protocol-based service execution. When executed, the logic is operable to obtaining a switching function service that carries voice parameters; and playing a voice according to the switching function service that carries voice parameters; and executing the switching function service.

Although the invention has been described through preferred exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. A Computer Supported Telecommunications Applications (CSTA) protocol-based service delivery method, comprising:
obtaining a switching function service carrying voice parameters; and
delivering the switching function service carrying the voice parameters to the switch side.

2. The method according to claim 1, wherein the switching function service comprises at least one of DivertCall service, Single Step Transfer service, and RouteSelect service.

3. The method according to claim 1 or 2 , wherein the voice parameters are set in a private data field of common arguments of the switching function services.

4. The method according to one of the claims 1-3, wherein obtaining a switching function service carrying voice parameters comprises at least one of:
retrieving the switching function service carrying the voice parameters stored locally;
obtaining the switching function service carrying the voice parameters from other network entities; and
generating the switching function service carrying the voice parameters.

5. A Computer Supported Telecommunications Applications (CSTA) protocol-based service execution method, comprising:
obtaining a switching function service carrying voice parameters sent;
playing a voice according to the switching function service carrying the voice parameters; and
executing the switching function service.

6. The method according to claim 5, wherein the playing voice according to the switching function service carrying the voice parameters comprises:
resolving the switching function service carrying the voice parameters according to a voice parameter structure negotiated with a PC side; and
playing the voice if the resolution succeeds.

7. The method according to claim 5 or 6 , further comprising at least one of:
playing the voice according to a voice content, if the voice parameters carrying the voice content; and
playing the voice according to a voice content stored locally or obtained from other network entities, if the voice parameters designate the voice content but do not carry the voice content; and playing the voice according to a voice content stored locally or obtained from other network entities, if the voice parameters do not designate the voice content; wherein the voice content suits the switching function service carrying the voice parameters

8. A Computer Supported Telecommunications Applications (CSTA) protocol-based service delivery apparatuses, comprising:
a service obtaining unit, adapted to obtain a switching function service carrying voice parameters; and
a service delivery unit, adapted to send the switching function service carrying the voice parameters to the switch side.

9. The apparatus according to the claim 8, wherein the service obtaining unit obtains the switching function service carrying voice parameters from other network entities or generates the switching function service carrying voice parameters.

10. The apparatus according to the claim 8 or 9, further comprising:
a service storing unit, adapted to store the switching function service carrying the voice parameters;
wherein the service obtaining unit is further adapted to retrieve the switching function service carrying the voice parameters from the service storing unit when necessary.

11. A Computer Supported Telecommunications Applications (CSTA) protocol-based service execution apparatuses, comprising:
a service obtaining unit, adapted to obtain a switching function service carrying voice parameters;
a voice playing unit, adapted to play a voice according to the switching function service carrying the voice parameters; and
a service executing unit, adapted to execute the switching function service.

12. The apparatus according to claim 11, further comprising:
a parameter structure negotiating unit, adapted to negotiating with a PC side about the voice parameter structure;
wherein the voice playing unit is further adapted to resolve the switching function service carrying the voice parameters according to the voice parameter structure as negotiated with the PC and play the voice if the resolution succeeds.

13. The apparatus according to claim 11 or 12, wherein the voice parameters carry a voice content, and the voice playing unit plays the voice according to the voice content carried in the voice parameters.

14. The apparatus according to claim 11 or 12, further comprising:
a voice content storing unit, adapted to store voice contents;
wherein the voice playing unit is further adapted to play the voice according to the voice content obtained from the voice content storing unit, if the voice parameters designate the voice content but do not carry the voice content or if the voice parameters do not designate the voice content.

15. The apparatus according to claim 11 or 12, further comprising:
a voice content obtaining unit adapted to obtain the voice content from other network entities if the voice content is neither carried in the voice parameters nor stored locally;
wherein the voice playing unit is further adapted to play the voice according to the voice content obtained from the other network entities.

16. A computer readable media, comprising logic encoded in the computer readable media, the logic when executed operable to implement the method according to claims 1-4.

17. A computer readable media, comprising logic encoded in the computer readable media, the logic when executed operable to implement the method according to claims 5-7.
